# EUROPEAN PATENT APPLICATION

(11) **EP 3 923 463 A1**
(43) Date of publication of application: **15.12.2021**
(21) Application number: 20275106.1
(22) Date of filing: 11.06.2020
(51) Int. Cl.: H02P 6/08, H02P 6/16, H02P 6/17, H02P 6/28, H02P 21/05, H02P 21/22, H02P 25/022

(54) **SERVO POWER LIMITING**

(71) Applicant: MBDA UK Limited, Stevenage, Hertfordshire SG1 2DA (GB)
(72) Inventor: The designation of the inventor has not yet been filed
(74) Representative: BAE SYSTEMS plc Group IP Department

(57) **Abstract**

A method of actuating an article using a servo actuation system is disclosed. The system comprises a motor, a controller and an inverter. The controller comprises a position controller, a velocity controller and a current controller; the position controller outputs velocity demands to the velocity controller, the velocity controller outputs current demands to the current controller, and the current controller outputs voltage demands to the inverter. The inverter outputs inverted voltage demands to the motor. The method comprises: determining a parameter downstream of the inverter; calculating a limiting value from the parameter and a defined supply power limit; and applying the limiting value in the controller to ensure that the power drawn by the servo actuation system remains within the defined supply power limit.

## Description

### Field of the Invention

The invention concerns a servo actuation system. The invention also concerns a method of actuating an article using a servo actuation system.

### Background of the Invention

In electrical servo actuation systems for example systems utilising field-oriented-control for torque control, there can be large and rapid changes in the power drawn from the electrical supply. Depending on the characteristics of the supply, the supply voltage can vary considerably as power is drawn. The supply voltage can collapse if there is a passive battery source, or can exceed the capability limits of a controlled source such as an alternator or rectifier, damaging the power source itself. In particular, when there are multiple units drawing from the same power source as is the case in missile systems, excessive power consumption by one unit can cause difficulties for the other units operating from the same source. It is desirable to limit the power drawn by individual units of the missile from the electrical supply to overcome the above-mentioned difficulties.

It is not straightforward to apply known power limiting schemes from other applications to a missile. A missile is compact, and therefore there is a need to minimise the number/size of components. In addition, reliability is key. New components may fail and therefore need to be tested at start-up, which takes time; however, lengthening the missile launch/ reaction time is undesirable.

Known methods of limiting power drawn in missile servo actuation systems having multiple loads tend to limit power at source. Such methods are inefficient, and result in reduced capability. For example, an existing power limiting scheme in a missile considers the current flowing in the motor. If the current exceeds a predetermined value, then action is taken. Since current, on its own, does not represent power consumed particularly well (I²R losses are a function of resistance too, and resistance may change with temperature), there is additionally a fairly inaccurate power estimate based on a static nominal resistance value and neglecting (load torque x speed) and (inertia x speed x acceleration).

The invention seeks to provide an improved method of actively (i.e. in real time) limiting power drawn by missile servo actuation systems according to varying demands, and a servo actuation system configured to implement such a method.

### Summary of the Invention

In a first aspect, the invention provides a method of actuating an article using a servo actuation system, the system comprising a motor, a controller and an inverter; wherein the controller comprises a position controller, a velocity controller and a current controller, and wherein the position controller outputs velocity demands to the velocity controller, the velocity controller outputs current demands to the current controller, and the current controller outputs voltage demands to the inverter; and wherein the inverter outputs inverted voltage demands to the motor; the method comprising: (i) determining a parameter downstream of the inverter; (ii) calculating a limiting value from the parameter and a defined supply power limit; applying the limiting value in the controller to ensure that the power drawn by the servo actuation system remains within the defined supply power limit.

The invention recognises that a power limiting method in a servo actuation system can be implemented by determining a parameter downstream of the inverter and then using that parameter to calculate a limiting value to be applied by the controller to ensure power of the servo actuation system is limited within a defined power limit. The parameter may be a characteristic of the motor, such as motor voltage or motor current. Such a method reduces components in the servo actuation system, for example it avoids a need for a sensor upstream of the inverter. The method can therefore rely on existing components including sensors which are already in situ downstream of the inverter.

The motor may be a servo motor for example a brushless DC servomotor. The motor may be another type of electric motor. The position controller, velocity controller, and current controller may be connected in series. The controller may also comprise a position estimator and/or a velocity estimator. The inverter may be a three-phase MOSFET based inverter, or another kind of inverter. The inverter may split the inverted voltage demands into three phases having an equivalent average voltage and output them to the motor
As will be appreciated, in the present context "downstream" has the meaning situated closer to the load i.e. closer to the motor, whilst "upstream" has the meaning situated further away from the load i.e. closer to the controller. Voltage demands may be DC voltage demands. Inverted voltage demands may be AC voltage demands. The defined supply power limit may be a pre-determined or pre-known power limit.

Step (i) may comprise estimating the motor voltage downstream of the inverter.

The motor voltage may be estimated from the voltage demands output by the current controller.

Step (ii) may comprise calculating a motor current limit from the estimated motor voltage and the defined supply power limit.

Step (iii) may comprise applying the motor current limit upstream of the current controller.

Step (iii) may comprise applying the motor current limit to the current demands output by the velocity controller.

Step (i) may comprise measuring the motor current downstream of the inverter. This step may advantageously make use of existing current sensors used for obtaining current measurements for field oriented control (therefore reducing the number of components compared to the systems of the prior art). In a departure from methods of the prior art, a direct measurement of supply current may not be required.

Step (ii) may comprise calculating a limiting voltage from the measured motor current and the defined supply power limit.

Step (iii) may comprise applying the limiting voltage downstream of the current controller.

Step (iii) may comprise applying the limiting voltage to the voltage demands output by the current controller.

The method may further comprise compensating for variations in the supply voltage by: measuring supply voltage upstream of the inverter; determining the inverter duty cycle against a nominal voltage; scaling the inverted voltage demands output by the inverter to compensate for deviations in the supply voltage away from the nominal. Whatever the voltage demand output from the current controller, and whether it has been power-limited (by either method), this set of steps may ensure that the phase width modulation duty cycle applied by the inverter is adjusted to compensate for variations in supply voltage. The deadband compensation function may effectively remove the inverter non-linearity, making the real applied voltage very close to the voltage demanded.

In more detail, the method may further comprise compensating for variations in the supply voltage by (i) measuring supply voltage upstream of the inverter, (ii) determining the inverter duty cycle against a nominal voltage, (iii) determining motor voltage from the measured supply voltage and the inverter duty cycle with compensation for deadband non-linearity, (iv) comparing the motor voltage against the voltage demands output by the inverter and then subsequently scaling the voltage demands.

The controller may utilise field-oriented control to control motor torque and field flux.

The method may be a method of actuating a fin of a missile. The method may be a method of actuating another component of a missile such as a moving seeker gimbal or wings. The method may be particularly useful in a missile, where space is limited and it is desirable to reduce the number of components and the weight. The method may alternatively be deployed in an industrial, automotive, aeronautical or robotic application for example in steering a vehicle or moving aircraft control surfaces or the rudder of a boat.

In a second aspect, the invention provides a servo actuation system for actuating an article comprising: a motor; a processor; an inverter; wherein the processor comprises a position controller module, a velocity controller module and a current controller module; and wherein the position controller module is arranged to output velocity demands to the velocity controller module, and the velocity controller module is arranged to output current demands to the current controller module, and the current controller module is arranged to output voltage demands to the inverter; and wherein the inverter is arranged to output inverted voltage demands to the motor; and wherein the processor is arranged to determine a parameter downstream of the inverter, and to calculate a limiting value from the parameter and a defined supply power limit, and to apply the limiting value in the processor to ensure that the power drawn by the servo actuation system remains within the defined supply power limit.

The servo actuation system may comprise a current sensor arranged to measure current downstream of the inverter, wherein the parameter is the current downstream of the inverter, and the limiting value is a limiting voltage.

The servo actuation system may further comprise a voltage sensor upstream of the inverter.

The article may be a fin of a missile.

It will of course be appreciated that features described in relation to one aspect of the invention may be incorporated into other aspects of the invention. For example, the method of the invention may incorporate any of the features described with reference to the apparatus of the invention and *vice versa.*

### Description of the Drawings

Two embodiments of the invention will now be described by way of example only with reference to the accompanying drawings of which:
Figure 1 is a high-level schematic diagram of a servo actuation system according to the first or second example embodiments of the invention;
Figure 2 is a schematic diagram of the servomotor in the servo actuation system of Figure 1;
Figure 3 is a schematic diagram of the current sensor and inverter in the servo actuation system of Figure 1;
Figure 4 is a schematic diagram of the controller in the servo actuation system of Figure 1;
Figure 5 is a schematic diagram of the gear box in the servo actuation system of Figure 1;
Figure 6 is a high-level flow diagram of a method of actuating an article using the servo actuation system of the first example embodiment of the invention;
Figure 7 is a high-level flow diagram of a method of actuating an article using the servo actuation system of the second example embodiment of the invention.

### Detailed Description

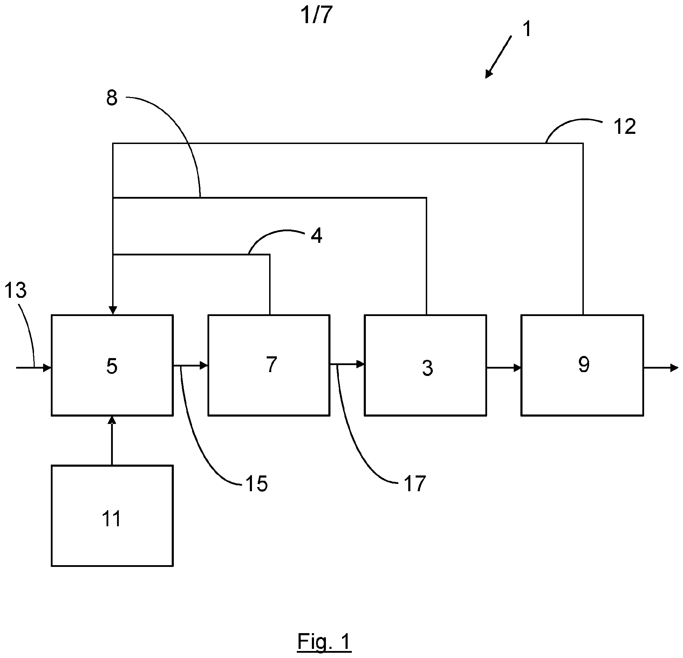

The servo actuation system 1 (Figure 1) of the first example embodiment of the invention controls positioning of an article - in this example embodiment, missile fins. The control system 1 comprises a brushless DC servomotor 3, a controller 5, an inverter module 7, a gear box 9 and a variable voltage DC power supply 11. In the first example embodiment of the invention, the power supply 11 is connected to the controller 5, but in another embodiment may be connected via another component part.

A position demand 13 is input to the controller 5, which outputs a DC voltage demand 15 to the inverter module 7. The inverter module 7 produces an equivalent average AC motor voltage demand 17 to drive each phase of the motor 3. The rotor (not shown) of the motor 3 rotates according to the demanded voltage, and the output shaft (not shown) actuates the fins (not shown) via the gear box 9. A first feedback loop 4 is provided from the inverter module 7 to the controller 5. A second feedback loop 8 is provided from the motor 3 to the controller 5. A third feedback loop 12 is provided from the gear box 9 to the controller 5.

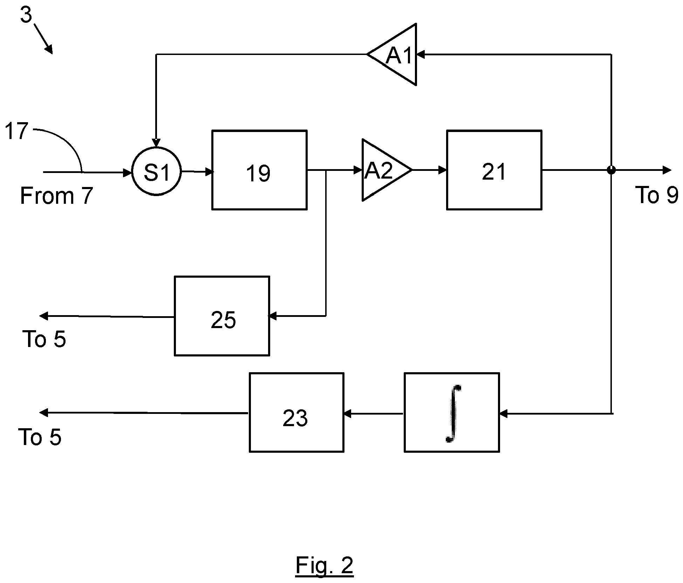

The servomotor 3 (Figure 2) comprises a motor electronics part 19, which outputs via an amplifier A2 to a motor mechanics part 21. The output of the motor mechanics part 21 is amplified using an amplifier A1 and summed with the AC motor voltage demand 17 using summer S1 and input to the motor electronics part 19, providing a loop. The motor electronics part 19 has a standard construction comprising transistors for switching current through the stator windings (components not shown). The motor mechanics part 21 also has a standard construction comprising a motor rotor including permanent magnets, and a stator with three windings (components not shown). The output shaft (not shown) of the motor 3 actuates the fins (not shown) via the gear box 9 in a standard manner: the motor drives a ballscrew (i.e. a ballnut), which converts rotary motion to linear motion and pushes on a torque arm, to provide rotation in an orthogonal axis.

The motor 3 comprises a position sensor 23 which detects the motor position by integrating the motor velocity output, and a current sensor 25 which measures the motor current (i.e. the output of the motor electronics part). Both of the position sensor 23 and current sensor 25 output to the controller 5, in the second feedback loop 8.

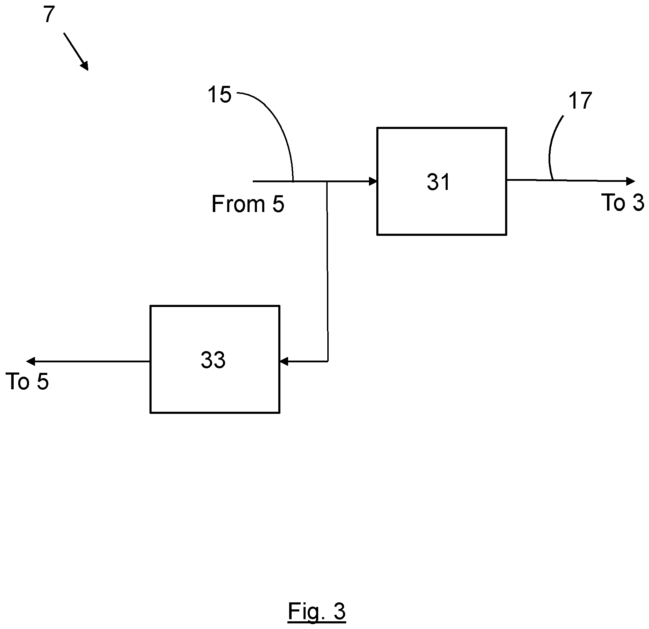

The inverter module 7 comprises an inverter 31 and a voltage sensor 33 positioned upstream of the inverter 31 i.e. situated closer to the controller 5 than the inverter 31 / situated further from the motor 3 than the inverter 31 (Figure 3). The inverter 31 is a three-phase MOSFET based inverter. The inverter 31 imposes AC motor voltage demands 17 on the motor terminals by switching the motor terminals between the high and low sides of the power supply 11 in a controlled switching sequence. The voltage sensor 33 measures the supply voltage and outputs to the controller 5 in the first feedback loop 4.

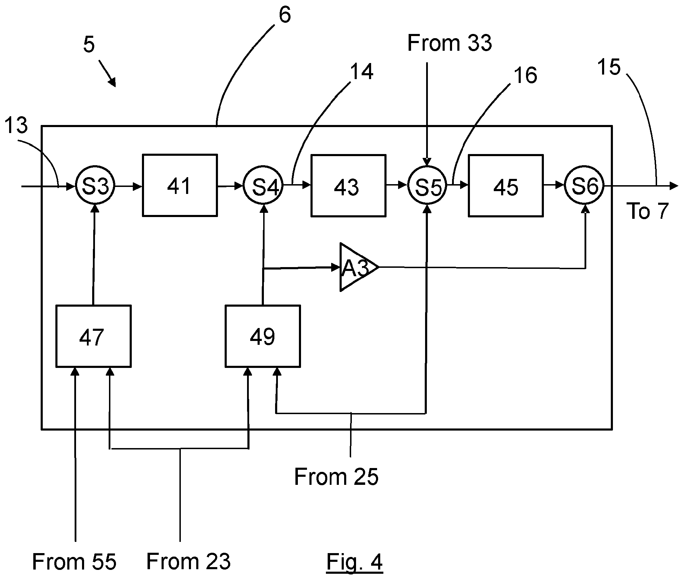

The controller 5 (Figure 4) in this example embodiment of the invention is implemented in software on a general purpose processor 6. In an alternative embodiment of the invention, the controller 5 may be implemented in hardware, for example using field-programmable gate arrays. The controller 5 in the present example embodiment includes the following software modules: a position controller 41, a velocity controller 43, a current controller 45, a position estimator 47, and a velocity estimator 49. The position controller 41, the velocity controller 43, and the current controller 45 are connected in series.

A position demand 13 is input to the position controller 41. The position controller 41 outputs a velocity demand 14 to the velocity controller 43. The velocity controller 43 outputs a current demand 16 to the current controller 45. The current controller 45 calculates a voltage demand, which is scaled, and output to the inverter module 7 as a phase width modulation duty cycle demand 15.

The position estimator 47 reads from the position sensor 23 in the motor 3, and from a second position sensor 55 attached to the fins 53 being controlled (described further herein in the discussion relating to the gear box 9). The position estimator 47 outputs a signal which is combined with the position demand 13 using a third summer S3, and provided to the position controller 41.

The position measurement of the position sensor 23 in the motor 3 is also output to the velocity estimator 49. The velocity estimator 49 also reads from the current sensor 25 in the motor 3. The velocity estimator 49 outputs directly (i.e. not via the position controller 41) to a fourth summer S4. The fourth summer S4 combines the output of the velocity estimator 49 with the output of the position controller 41 to provide the velocity demand 14 to the velocity controller 43.

A fifth summer S5 combines the outputs of the velocity controller 43, the voltage sensor 33 upstream of the inverter 31, and the current sensor 25, and outputs to the current controller 45.

A sixth summer S6 combines the output of the current controller 45 with an amplified output of the velocity estimator 49 (via an amplifier A3), and outputs to the inverter module 7.

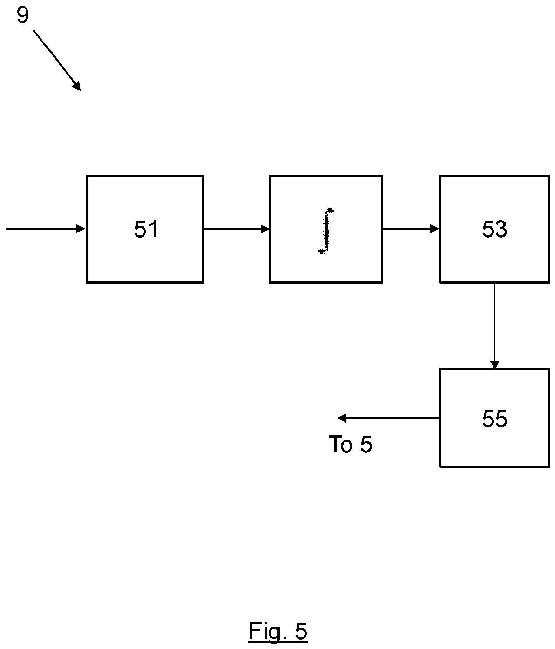

The gear box 9 (Figure 5) comprises primary gearing 51 which through the drivetrain (not shown) moves the fins 53 (including integrating velocity to provide a fin position). The gear box 9 also comprises a position sensor 55 which measures the position of the fins 53 and outputs to the controller 5, as discussed above.

The method of the first example embodiment of the invention is a method of actuating missile fins using a servo actuation system.

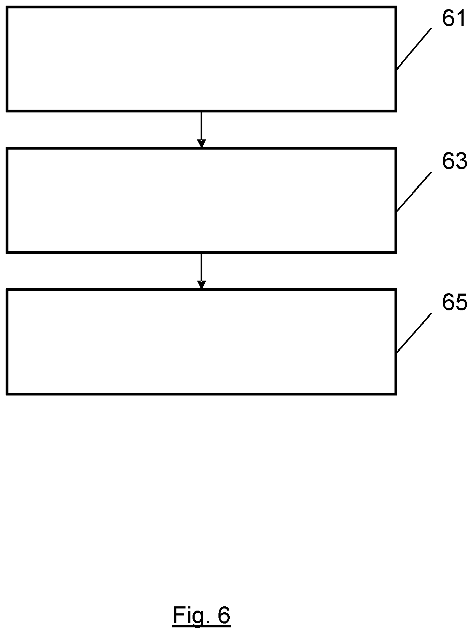

At a high level (Figure 6), the method of the first example embodiment of the invention comprises a first step 61 of estimating motor voltage downstream of the inverter module 7, a second step 63 of calculating a motor current limit from the estimated motor voltage and a maximum power demand (i.e. a defined power supply limit), and a third step 65 of applying the motor current limit in the controller 5 to limit the motor current demands 16 (from the velocity controller to the current controller) to ensure that the power drawn by the servo actuation system remains within the maximum power demand. The motor current limit is placed upstream of the current controller 45, on the current demanded 16 by the velocity controller 43.

In the first step 61, the motor voltage (i.e. the voltage downstream of the inverter module) is estimated as the product of the sensed bus voltage and the inverter phase width modulation duty cycle, with compensation for non-linear deadband effects. The motor voltage (i.e. the average voltage applied to the motor terminals) is determined by first measuring the supply voltage using the voltage sensor 33 positioned upstream of the inverter 31, then calculating the inverter duty cycle (i.e. the demanded phase width modulation duty cycle).

The basic inverter duty cycle is known from the initial user defined phase-width-modulation set up of the system. However, in accordance with the first example embodiment of the invention, a correction is made to the known inverter duty cycle to account for deadband introduced by the inverter to prevent the upper and lower MOSFETS being "on" simultaneously. Deadband causes a significant non-linearity in the controller forward path and means that the ratio of times actually spent in each switching state is not as desired. Correcting for deadband enables a more realistic estimation of the average voltage applied to the motor.

During the duration of the deadband, pre-existing current flow means that the inverter fly-back diodes are active. The active diodes connect the motor phases to one of the voltage rails, with the effect that extra time can be spent in an active drive state, not just in a zero state, the particular drive state being dependent on the direction of current flow. If current is flowing into a phase, then during the deadband period, that phase spends extra time in its low drive state. To compensate, in the first example embodiment of the invention, the phase is switched early, increasing the time spent in the high state. Conversely, if current is flowing out of a phase, then during the deadband period, that phase spends extra time in its high drive state. To compensate, the phase is switched late, increasing the time spent in the low state. The net effect in the motor drive is to spend the originally desired amount of time in the correct effective switching state, thereby compensating for the deadband nonlinearity.

Finally in this example of the first step, the motor voltage is inferred from the product of the measured supply voltage and the calculated inverter duty cycle.

In the second step 63, a motor current limit is calculated by dividing a known or pre-determined supply power limit in Watts by the estimated motor voltage. The supply power limit in the first example embodiment of the invention is 1000 Watts, representing a desired proportion of the total available power of the source. The motor current limit represents the current which should not be exceeded if the supplied power is to remain within the power limit.

In the third step 65, the motor current limit is applied upstream of the current controller 45 to ensure that the power drawn by the servo actuation system 1 remains within the power limit.

As described above, the control algorithm uses nested loops. A position demand 13 is input to the position controller 41. The position controller 41 outputs a velocity demand 14 to the velocity controller 43. The velocity controller 43 attempts to make the motor 3 match the velocity demand 14 by asking for more or less current (which in turn may lead to more or less acceleration and a change in speed). The current controller 45 adjusts the motor voltage in order that the motor current matches the current demand 16. The deadband compensation function effectively removes the inverter non-linearity, making the real applied motor voltage very close to the motor voltage demanded.

The first example embodiment calculates an accurate limit for the current demand by dividing the power limit by the estimated motor voltage. This value is filtered slightly, then applied upstream of the current controller 45 to the current demand 16 output by the velocity controller 43.

Since it is concerned with power crossing the motor air-gap, the method of the first example embodiment of the invention naturally copes with variation in motor torque constant or resistance (for example due to temperature changes). This allows the power to exceed the defined limit for a brief time (due to the filter delaying knowledge of a power excursion); however, the effect is smooth and temporary.

Whilst some power excursions do occur, the control under the method of the first example embodiment is considerably smoother than provided under the method of the second example embodiment of the invention (described below).

The servo actuation system apparatus 1 (including the controller 5) of the second example embodiment of the invention is the same as the first example embodiment of the invention (Figs 1-6).

The second example embodiment of the invention differs in how the controller 5 applies the limiting value. The second example embodiment of the invention utilises a different type of limiting value and applies it in a different place.

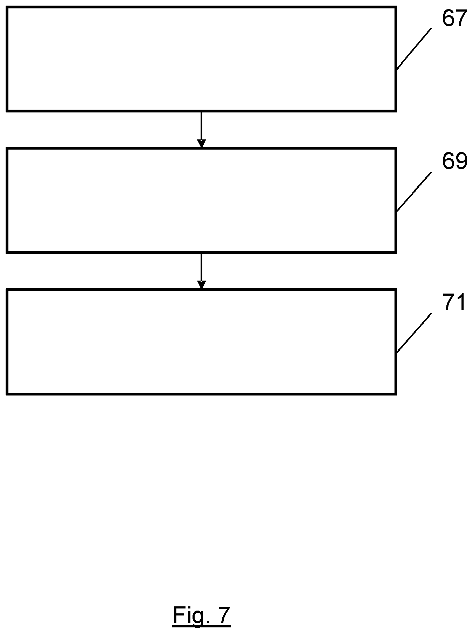

At a high level (Figure 7), the method of the second example embodiment of the invention comprises a first step 67 of measuring motor current downstream of the inverter module 7, a second step 69 of calculating a motor voltage limit (i.e. a limiting voltage) from the measured motor current and a maximum power demand (i.e. a defined power supply limit), and a third step 71 of applying the motor voltage limit in the controller to limit the motor voltage demands (from the current controller 45 to the inverter module 7) to ensure that the power drawn by the servo actuation system remains within the maximum power demand. The motor voltage limit is placed downstream of the current controller 45, on the voltage demanded 15 by the current controller 45.

In the first step 67, the motor current is measured using the current sensor 25 positioned downstream of the inverter module 7.

In the second step 69, the motor voltage limit is calculated by dividing the power supply limit by the measured motor current.

In the third step 71, the motor voltage limit is applied by the controller 5 to the voltage demands 15 output by the current controller 45 to ensure that the power drawn remains within the power limit.

The two schemes differ in that the method of the first example embodiment of the invention uses the estimated motor voltage to place a limit on the current demanded 16 by the velocity controller 43, and the method of the second example embodiment of the invention uses the measured motor current to place a limit on the voltage demands 15 output from the current controller 45.

Whilst the invention has been described and illustrated with reference to particular embodiments, it will be appreciated by those of ordinary skill in the art that the invention lends itself to many different variations not specifically illustrated herein. By way of example only, certain possible variations will now be described.

In an alternative embodiment of the invention, the power range could be lower than 1000W, for example 100W or less, or could be higher than 1000W.

There may be an alternative mechanical arrangement connecting the motor to the load, or the arrangement may be direct drive.

The load could, instead of fins, be another moving part such as a moving seeker gimbal or wings of a missile.

Where in the foregoing description, integers or elements are mentioned which have known, obvious or foreseeable equivalents, then such equivalents are herein incorporated as if individually set forth. Reference should be made to the claims for determining the true scope of the invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of actuating an article using a servo actuation system, the system comprising a motor, a controller and an inverter;
wherein the controller comprises a position controller, a velocity controller and a current controller, and wherein the position controller outputs velocity demands to the velocity controller, the velocity controller outputs current demands to the current controller, and the current controller outputs voltage demands to the inverter; and
wherein the inverter outputs inverted voltage demands to the motor;
the method comprising:
(i) determining a parameter downstream of the inverter;
(ii) calculating a limiting value from the parameter and a defined supply power limit;
(iii) applying the limiting value in the controller to ensure that the power drawn by the servo actuation system remains within the defined supply power limit.

2. A method according to claim 1, wherein step (i) comprises estimating a motor voltage downstream of the inverter.

3. A method according to claim 2, wherein the motor voltage is estimated from the voltage demands output by the current controller.

4. A method according to claim 2 or 3 wherein step (ii) comprises calculating a motor current limit from the estimated motor voltage and the defined supply power limit.

5. A method according to claim 4, wherein step (iii) comprises applying the motor current limit upstream of the current controller.

6. A method according to claim 5, wherein step (iii) comprises applying the motor current limit to the current demands output by the velocity controller.

7. A method according to claim 1, wherein step (i) comprises measuring the motor current downstream of the inverter.

8. A method according to claim 7, wherein step (ii) comprises calculating a limiting voltage from the measured motor current and the defined supply power limit.

9. A method according to claim 8, wherein step (iii) comprises applying the limiting voltage downstream of the current controller.

10. A method according to claim 9, wherein step (iii) comprises applying the limiting voltage to the voltage demands output by the current controller.

11. A method according to any preceding claim further comprising compensating for variations in the supply voltage by:
(iv) measuring supply voltage upstream of the inverter;
(v) determining the inverter duty cycle against a nominal voltage;
(vi) scaling the inverted voltage demands output by the inverter to compensate for deviations in the supply voltage away from the nominal voltage.

12. A servo actuation system for actuating an article comprising:
a motor;
a processor;
an inverter;
wherein the processor comprises a position controller module, a velocity controller module and a current controller module; and
wherein the position controller module is arranged to output velocity demands to the velocity controller module, and the velocity controller module is arranged to output current demands to the current controller module, and the current controller module is arranged to output voltage demands to the inverter; and
wherein the inverter is arranged to output inverted voltage demands to the motor; and
wherein the processor is arranged to determine a parameter downstream of the inverter, and to calculate a limiting value from the parameter and a defined supply power limit, and to apply the limiting value in the processor to ensure that the power drawn by the servo actuation system remains within the defined supply power limit.

13. A servo actuation system according to claim 12, further comprising a current sensor arranged to measure current downstream of the inverter, wherein the parameter is the current downstream of the inverter, and the limiting value is a limiting voltage.

14. A servo actuation system according to claim 12 or 13, further comprising a voltage sensor upstream of the inverter.

15. A servo actuation system according to any of claims 12-14, wherein the article is a fin of a missile.
